# EUROPÄISCHE PATENTANMELDUNG

(11) **EP 3 726 684 A1**
(43) Veröffentlichungstag der Anmeldung: **21.10.2020**
(21) Anmeldenummer: 19169863.8
(22) Anmeldetag: 17.04.2019
(51) Int. Cl.: H02J 3/14, H02J 3/38

(54) **STEUERVORRICHTUNG UND VERFAHREN ZUR STEUERUNG EINER LEISTUNGSAUFNAHME UND/ODER EINER LEISTUNGSABGABE EINES ENERGIESYSTEMS SOWIE NIEDERSPANNUNGSNETZ**

(71) Anmelder: Siemens Aktiengesellschaft, 80333 München (DE)
(72) Erfinder: Amthor, Arvid, 98631 Grabfeld OT Nordheim (DE); Metzger, Michael, 85570 Markt Schwaben (DE); Niessen, Stefan, 91056 Erlangen (DE); Schreck, Sebastian, 90429 Nürnberg (DE); Thiem, Sebastian, 91413 Neustadt an der Aisch (DE)

(57) **Zusammenfassung**

Es wird eine Steuervorrichtung (42) zur Steuerung einer Leistungsaufnahme und/oder einer Leistungsabgabe eines Energiesystems (6) über einen Netzanschlusspunkt (4) eines Niederspannungsnetzes (2) vorgeschlagen, wobei mittels der Steuervorrichtung (42) eine Netzspannung am Netzanschlusspunkt (4) erfassbar ist. Erfindungsgemäß ist die Steuervorrichtung (42) dazu ausgebildet
- die Leistungsaufnahme zu verringern und/oder die Leistungsabgabe zu erhöhen, falls die Netzspannung unterhalb eines ersten Schwellenwertes (421) ist; und/oder
- die Leistungsaufnahme zu erhöhen und/oder die Leistungsabgabe zu verringern, falls die Netzspannung oberhalb eines bezüglich des ersten Schwellenwertes (421) größeren zweiten Schwellenwertes (422) ist.

Weiterhin betrifft die Erfindung ein Verfahren zur Steuerung einer Leistungsaufnahme und/oder einer Leistungsabgabe eines Energiesystems (6) sowie ein Niederspannungsnetz (2).

## Beschreibung

Die Erfindung betrifft eine Steuervorrichtung gemäß dem Oberbegriff des Patentanspruches 1, ein Verfahren gemäß dem Oberbegriff des Patentanspruches 4 sowie ein Niederspannungsnetz gemäß dem Oberbegriff des Patentanspruches 8.

Ein Energieversorgungssystem weist typischerweise Anschlussteilnehmer auf, die an ein Stromverteilernetz des Energieversorgungssystems über einen Netzanschluss (englisch: Point of Common Coupling, abgekürzt: PCC) angeschlossen sind. Die Anschlussteilnehmer sind typischerweise Energiesystem, beispielsweise industrielle Anlagen, private und/oder geschäftliche Wohngebäude. Nach dem Netzanschlusspunkt weist jedes Energiesystem unterschiedliche energetische Anlagen zur Erzeugung, einem Verbrauch und/oder einer Speicherung von elektrischer Energie auf. Beispielsweise ist das Energiesystem ein privates Wohngebäude mit einer Photovoltaikanlage.

Wird innerhalb des Energiesystems elektrische Leistung beziehungsweise Energie verbraucht und/oder erzeugt, so würde die Spannung am Netzanschlusspunkt sich verändern. Allerdings ist ein Betreiber des Stromverteilernetzes dazu verpflichtet die Netzspannung innerhalb bestimmter Toleranzen zu halten. Beispielsweise muss in Deutschland die Netzspannung von Niederspannungsnetzen (einphasig) einen Wert zwischen 207 V und 253 V aufweisen (VDE AR-N 4100). Die Normspannung, das heißt der Sollwert der Netzspannung, ist hierbei 230 V. Weiterhin dürfen maximal zulässige thermische Grenzströme der Betriebsmittel des Niederspannungsnetzes nicht überschritten werden. Insbesondere im Hinblick auf erneuerbare Energien und deren Einspeisung durch eine Mehrzahl von Energiesystemen können die genannten Grenzen verletzt werden, falls nicht weitere Verfahren die Einspeisung beziehungsweise den Verbrauch der Energiesysteme koordinieren.

Nach dem Stand der Technik wird bei einem Niederspannungsnetz die Einhaltung der Grenzen der Netzspannung durch eine direkte Einflussnahme auf die Komponenten des jeweiligen Energiesystems, durch Netzanschlussbedingungen und/oder einen Einsatz entsprechender technischer Betriebsmittel sichergestellt. Fällt beispielsweise die Netzspannung signifikant, so können einzelne Komponenten des Energiesystems, beispielsweise Wärmepumpen, mittels eines Rundsteuersignals abgeschaltet werden. Eine erhöhte Netzspannung ist typischerweise auf eine Einspeisung von erneuerbar erzeugten Energien zurückzuführen. Hier wird bisher durch die Netzanschlussbedingungen die Nennleistung der zugehörigen Anlage, beispielsweise einer Photovoltaikanlage, begrenzt und/oder ein festes Verhältnis zwischen Wirkleistung und Blindleistung vorgegeben, beispielsweise durch einen festen Phasenverschiebungswinkel von cos *ϕ* = 0,9.

Eine weitere Möglichkeit die genannte Problematik bezüglich der Netzspannung für Niederspannungsnetze zu lösen ist eine Verwendung von technischen Betriebsmitteln, wie beispielsweise regelbaren Ortsnetzstationen, die dynamisch auf die jeweilige Netzspannung an einem Strang eingestellt werden können. Diese Betriebsmittel sind jedoch mit hohem Aufwand und Kosten verbunden. Den genannten Verfahren ist gemeinsam, dass stets der Betreiber des Niederspannungsnetzes Maßnahmen zur Einhaltung der Netzspannung treffen muss.

Der vorliegenden Erfindung liegt die Aufgabe zugrunde, eine verbesserte Steuerung einer Netzspannung eines Niederspannungsnetzes bereitzustellen.

Die Aufgabe wird durch eine Steuervorrichtung mit den Merkmalen des unabhängigen Patentanspruches 1, durch ein Verfahren mit den Merkmalen des unabhängigen Patentanspruches 4 sowie durch ein Niederspannungsnetz mit den Merkmalen des unabhängigen Patentanspruches 8 gelöst. In den abhängigen Patentansprüchen sind vorteilhafte Ausgestaltungen und Weiterbildungen der Erfindung angegeben.

Mittels der erfindungsgemäßen Steuervorrichtung zur Steuerung einer Leistungsaufnahme und/oder einer Leistungsabgabe eines Energiesystems über einen Netzanschlusspunkt eines Niederspannungsnetzes ist eine Netzspannung am Netzanschlusspunkt erfassbar. Erfindungsgemäß ist die Steuervorrichtung dazu ausgebildet
- die Leistungsaufnahme zu verringern und/oder die Leistungsabgabe zu erhöhen, falls die Netzspannung unterhalb eines ersten Schwellenwertes ist; und/oder
- die Leistungsaufnahme zu erhöhen und/oder die Leistungsabgabe zu verringern, falls die Netzspannung oberhalb eines bezüglich des ersten Schwellenwertes größeren zweiten Schwellenwertes ist.

Durch eine Leistungsaufnahme und/oder Leistungsabgabe innerhalb eines Zeitbereiches ergibt sich eine entsprechende aufgenommene beziehungsweise abgegebene Energiemenge in diesem Zeitbereich. In diesem Sinne sind die Begriffe Leistung und Energie in der vorliegenden Erfindung äquivalent.

Die Netzspannung ist gemäß der vorliegenden Erfindung zeitabhängig und wird somit aktuell, beispielsweise kontinuierlich oder in diskreten Zeitschritten, erfasst. Abhängig vom erfassten aktuellen Wert der Netzspannung erfolgt die erfindungsgemäße Steuerung. Hierbei umfasst ein Steuern ein Regeln. Die Steuerung der Netzspannung über die Leistungsaufnahme und/oder Leistungsabgabe des Energiesystems ist möglich, da es sich erfindungsgemäß um ein Niederspannungsnetz handelt, bei welchem die Netzspannung größtenteils durch die ausgetauschte Wirkleistung bestimmt ist.

Der Netzanschlusspunkt ist der Bereich innerhalb welchem das Energiesystem mit dem Niederspannungsnetz zum Leistungs- und/oder Energieaustausch gekoppelt ist (PCC). Der Netzanschlusspunkt kann ebenfalls als Verknüpfungspunkt bezeichnet werden.

Die erfindungsgemäße Steuerung kann weiterhin für eine Mehrzahl von Energiesystemen vorgesehen sein, wobei jedes der Energiesysteme mittels eines Netzanschlusspunktes am Niederspannungsnetz zum Leistungsaustausch (Leistungsaufnahme und/oder Leistungsabgabe) angeschlossen ist.

Ein Normalbereich der Netzspannung ist durch den ersten und zweiten Schwellenwert gekennzeichnet beziehungsweise begrenzt. Mit anderen Worten ist der Normalbereich durch den Spannungsbereich [*u*₁*,u*₂] gekennzeichnet, wobei *u*₁ den ersten Schwellenwert der Netzspannung und *u*₂ den zweiten Schwellenwert der Netzspannung mit *u*₁ < *u*₂ bezeichnet. Ein Sollwert der Netzspannung, beispielsweise 230 V, kann mit *u*₀ bezeichnet werden und ist innerhalb des Normalbereiches [*u*₁*,u*₂] angeordnet. Bevorzugt sind hierbei *u*₁ = *u*₀ - *Δu* und *u*₂ = *u*₀ + *Δu,* wodurch sich ein um den Sollwert der Netzspannung symmetrischer Normbereich der Netzspannung ausbildet. Dieser weist die Größe 2Δ*u* auf. Beispielsweise ist gemäß VDE AR-N 4100 der Sollwert der Netzspannung *u*₀ = 230 V mit Δ*u* = 23 V, sodass sich hierbei der Normbereich der Netzspannung von 207 V bis 253 V erstreckt.

Gemäß der vorliegenden Erfindung wird somit die Leistungsaufnahme und/oder die Leistungsabgabe des Energiesystems, wenigstens innerhalb eines bestimmten Zeitraumes, dynamisch in Abhängigkeit der Netzspannung verändert, das heißt erhöht oder verringert.

Erfindungsgemäß wird die Leistungsaufnahme des Energiesystems verringert, falls die Netzspannung unterhalb des ersten Schwellenwertes ist. Mit anderen Worten ist das Niederspannungsnetz derart stark belastet, dass die Netzspannung unterhalb des ersten Schwellenwertes sinkt. Durch die erfindungsgemäße Verringerung der Leistungsaufnahme kann vorteilhafterweise das Niederspannungsnetz entlastet werden. Dadurch kann einem weiteren Absinken der Netzspannung entgegengewirkt werden.

Weiterhin wird erfindungsgemäß die Leistungsabgabe des Energiesystems erhöht, falls die Netzspannung unterhalb des ersten Schwellenwertes ist. Dadurch kann vorteilhafterweise ebenfalls das Niederspannungsnetz derart unterstützt werden, dass das Absinken der Netzspannung wenigstens vermindert und bestenfalls gestoppt oder verhindert werden kann.

Erfindungsgemäß wird die Leistungsaufnahme des Energiesystems erhöht, falls die Netzspannung oberhalb des bezüglich des ersten Schwellenwertes größeren zweiten Schwellenwertes ist. Mit anderen Worten ist das Niederspannungsnetz derart wenig belastet, dass die Netzspannung oberhalb des zweiten Schwellenwertes steigt. Durch die erfindungsgemäße Erhöhung der Leistungsaufnahme kann vorteilhafterweise das Niederspannungsnetz belastet werden. Dadurch kann einer weiteren Erhöhung der Netzspannung entgegengewirkt werden.

Weiterhin wird erfindungsgemäß die Leistungsabgabe des Energiesystems verringert, falls die Netzspannung oberhalb des zweiten Schwellenwertes ist. Dadurch kann vorteilhafterweise ebenfalls das Niederspannungsnetz derart unterstützt werden, dass das Ansteigen der Netzspannung wenigstens vermindert und bestenfalls gestoppt oder verhindert werden kann.

Gemäß der vorliegenden Erfindung kann vorteilhafterweise einer Veränderung der Netzspannung bezüglich ihres Sollwertes vorteilhafterweise entgegengewirkt werden. Dadurch gelangt die Netzspannung bestenfalls wieder zurück in ihren Normalbereich. Hierzu bildet die erfindungsgemäße Steuervorrichtung eine Messvorrichtung zur Erfassung der (aktuellen) Netzspannung, sowie eine Steuer- und/oder Regelungsvorrichtung bezüglich der Leistungsaufnahme und/oder Leistungsabgabe des Energiesystems aus.

Ein Vorteil der vorliegenden Erfindung ist, dass das Energiesystem beziehungsweise seine Leistungsaufnahme und/oder Leistungsabgabe ganzheitlich gesteuert wird. Eine Steuerung auf Ebene der Komponenten, beispielsweise ein Abschalten von Wärmepumpen oder ein Abregeln von Photovoltaikanlagen, ist somit vorteilhafterweise nicht erforderlich. Allerdings kann eine solche Steuerung der einzelnen Komponenten zusätzlich vorgesehen sein. Weiterhin können dadurch Flexibilitäten, beispielsweise eine Speicherung und/oder Zwischenspeicherung von Energie, innerhalb des Energiesystems verbessert genutzt werden.

Weiterhin können durch die erfindungsgemäße lokale Steuerung technisch aufwendige und kostenintensive Betriebsmittel des Niederspannungsnetzes zur Steuerung/Regelung seiner Netzspannung entfallen. Insbesondere sind zusätzliche Kommunikationsschnittstellen zwischen dem Energiesystem beziehungsweise der Energiesysteme und einer Steuerung/Regelung des Niederspannungsnetzes nicht erforderlich. Diese können jedoch zusätzlich vorgesehen sein.

Ein weiterer Vorteil der vorliegenden Erfindung ist, dass Lieferverträge bezüglich des Verbrauchs und/oder der Einspeisung einer bestimmten Energiemenge eingehalten werden können. Das ist deshalb der Fall, da die Energiemenge sich aus der zeitlich integrierten Leistungsaufnahme und/oder Leistungsabgabe ergibt. Dadurch kann die Leistungsaufnahme und/oder Leistungsabgabe beliebig angepasst oder verändert werden, solange das Integral über die Leistungsaufnahme und/oder Leistungsabgabe konstant und gleich der zu verbrauchenden beziehungsweise zu liefernden Energiemenge ist.

Bei dem erfindungsgemäßen Verfahren zur Steuerung einer Leistungsaufnahme und/oder einer Leistungsabgabe eines Energiesystems über einen Netzanschlusspunkt eines Niederspannungsnetzes wird eine Netzspannung des Niederspannungsnetzes am Netzanschlusspunkt erfasst. Das erfindungsgemäße Verfahren ist wenigstens durch die folgenden Schritte gekennzeichnet:
- Verringern der Leistungsaufnahme und/oder Erhöhen der Leistungsabgabe, falls die Netzspannung unterhalb eines ersten Schwellenwertes ist; und/oder
- Erhöhen der Leistungsaufnahme und/oder Verringern der Leistungsabgabe, falls die Netzspannung oberhalb eines bezüglich des ersten Schwellenwertes größeren zweiten Schwellenwertes ist.

Es ergeben sich zur erfindungsgemäßen Steuervorrichtung gleichartige und gleichwertige Vorteile des erfindungsgemäßen Verfahrens.

Das erfindungsgemäße Niederspannungsnetz umfasst eine Steuervorrichtung gemäß der vorliegenden Erfindung und/oder einer ihrer Ausgestaltungen.

Hierbei ist die Steuervorrichtung bevorzugt am Netzanschlusspunkt des Energiesystems angeordnet.

Es ergeben sich zur erfindungsgemäßen Steuervorrichtung gleichartige und gleichwertige Vorteile des erfindungsgemäßen Niederspannungsnetzes.

Gemäß einer vorteilhaften Ausgestaltung der Erfindung ist die Leistungsaufnahme gemäß *P*ᵢₙ(*u*(*t*)) = *P̅*ᵢₙ·[1+*f*ᵢₙ(*u*(*t*)-*u*₀)] veränderbar, wobei u(t) die erfasste Netzspannung, *u*₀ einen Sollwert der Netzspannung, *P̅*ᵢₙ eine mittlere Leistungsaufnahme, und *f*ᵢₙ eine Kennlinie der Steuerung kennzeichnet, und *f*ᵢₙ(*u*(*t*) - *u*₀)<0 ist, falls die (erfasste) Netzspannung unterhalb des ersten Schwellenwertes ist, und *f*ᵢₙ(*u*(*t*)*-u₀*) > 0 ist, falls die (erfasste) Netzspannung oberhalb des zweiten Schwellenwertes ist.

Mit anderen Worten wird die Leistungsaufnahme vorteilhafterweise im Bereich um die mittlere Leistungsaufnahme gemäß der Kennlinie gesteuert. Die mittlere Leistungsaufnahme kann durch eine innerhalb eines Zeitintervall T zu liefernde Energiemenge *E_{T}* gekennzeichnet sein, das heißt es ist *P̅*ᵢₙ = *E_{T}*/*T.* Weiterhin bezeichnet der Index in einen Leistungsfluss in das Energiesystem, das heißt eine Leistungsaufnahme des Energiesystems. Die Kennlinie *f*ᵢₙ hängt von der Differenz aus der zum Zeitpunkt t gemessenen Netzspannung *u(t)* und dem Sollwert *u*₀ funktional ab. Hierbei kann grundsätzlich eine Vielzahl von funktionalen Abhängigkeiten vorgesehen sein. Die Kennlinie *f*ᵢₙ kennzeichnet somit im Wesentlichen die Steuerung/Regelung.

Eine besonders vorteilhafte Kennlinie *f*ᵢₙ ist durch *f*ᵢₙ(*u*(*t*)-*u*₀) = *-F*₁*,* falls *u*(*t*) ≤ *u*₁ ist, *fᵢₙ*(*u*(*t*) *- u*₀) = 0, falls *u*₁ *<u*(*t*) *< u₂* ist, und *fᵢₙ*(*u*(*t*) -*u*₀) = *F₂*, falls *u*(*t*) ≥ *u*₂ ist, gekennzeichnet, wobei hierbei *F*₁ und *F*₂ konstant und größer als Null sind. Mit anderen Worten wird die Leistungsaufnahme des Energiesystems *P*ᵢₙ im Bereich *u*(*t*) ≤ *u*₁ auf *P*ᵢₙ = *P̅*ᵢₙ(1 -*F*₁) reduziert beziehungsweise verringert, im Bereich *u*(*t*) ≥ *u₂* auf *P*ᵢₙ = *P̅*ᵢₙ(1 + *F₂*) erhöht, und im Bereich *u*₁ < *u*(*t*) < *u*₂ unverändert bei *P*ᵢₙ *= P̅*iₙ belassen. Mit anderen Worten ist *f*ᵢₙ(*u*(*t*) -*u*₀) = -*F*₁Θ(*u*₁ - *u*(*t*)) + *F*₂Θ(*u*(*t*) - *u*₂), wobei Θ die Heaviside-Funktion bezeichnet, welche durch *Θ*(*x*) = 0 für *x* < *0* und *Θ*(*x*) = 1 für *x* ≥ 0 definiert ist. Ist eine feste oder bestimmte Lieferenergie beziehungsweise Energiemenge innerhalb eines Zeitraumes *T* vorgesehen, so muss die Kennlinie die Bedingung *∫_{T}fᵢₙ*(*u*(*t*) - *u*₀)d*t* = 0 erfüllen. Diese Bedingung kann einen Zusammenhang zwischen *F*₁ und *F*₂ implizieren. Bevorzugt ist *F*₁ = *F*₂.

In einer vorteilhaften Ausgestaltung der Erfindung ist die Leistungsabgabe gemäß *P*ₒᵤₜ(*u*(*t*)) = *P̅*ₒᵤₜ·[1 - *f*ₒᵤₜ(*u*(*t*) - *u*₀)] veränderbar, wobei u(t) die erfasste Netzspannung, *u*₀ einen Sollwert der Netzspannung, *P̅*ₒᵤₜ eine mittlere Leistungsabgabe, und *f*ₒᵤₜ eine Kennlinie der Steuerung kennzeichnet, und *f*ₒᵤₜ(*u*(*t*) - *u*₀) < 0 ist, falls die (erfasste) Netzspannung unterhalb des ersten Schwellenwertes ist, und *f*ₒᵤₜ(*u*(*t*) - *u*₀) > 0 ist, falls die (erfasste) Netzspannung oberhalb des zweiten Schwellenwertes ist.

Mit anderen Worten wird die Leistungsabgabe vorteilhafterweise im Bereich um die mittlere Leistungsabgabe gemäß der Kennlinie gesteuert. Die mittlere Leistungsabgabe kann durch eine innerhalb eines Zeitintervall *T* zu liefernde Energiemenge *E_{T}* gekennzeichnet sein, das heißt es ist *P̅_{OUT}* = *E_{T}*/*T.* Weiterhin bezeichnet der Index out eine Leistungsfluss aus dem Energiesystem in das Niederspannungsnetz, das heißt eine Leistungsabgabe des Energiesystems. Die Kennlinie *f*ₒᵤₜ hängt von der Differenz aus der zum Zeitpunkt t gemessen Netzspannung *u*(*t*) vom Sollwert *u*₀ funktional ab. Hierbei kann grundsätzlich eine Vielzahl von funktionalen Abhängigkeiten vorgesehen sein. Die Kennlinie *f*ₒᵤₜ kennzeichnet somit im Wesentlichen die Steuerung/Regelung.

Eine besonders vorteilhafte Kennlinie *f*ₒᵤₜ für die Leistungsabgabe ist ebenfalls durch die bereits für den Fall der Leistungsaufnahme diskutierten und beschriebenen Kennlinie gegeben. Mit anderen Worten ist hierbei bevorzugt *f*_{*o*ut}(*u*(*t*) - *u*₀) = -*F*₁Θ(*u*₁-*u*(*t*)) + *F₂*Θ(*u*(*t*) - *u*₂). Der Unterschied zwischen einer Leistungsabgabe und einer Leistungsaufnahme manifestiert sich vorliegend im unterschiedlichen Vorzeichen in den Gleichungen für *P*ₒᵤₜ beziehungsweise *P*ᵢₙ. Zusammenfassend kann für eine Leistungsaufnahme und eine Leistungsabgabe die gemeinsame Gleichung zur Steuerung/Regelung *P*_{in/out}(*u*(*t*)) = *P̅*_{in/out} · [1-sgn(*P*_{in/out}) · *f*_{in/out}(*u*(*t*) - *u*₀)] verwendet werden, wobei hierbei die Leistungsaufnahme *P̅*ᵢₙ als positiv und die Leistungsabgabe *P*ₒᵤₜ als negativ bezüglich des Energiesystems angesehen wird. Mit anderen Worten ist sgn(*P*ᵢₙ)= 1 und sgn(*P*ₒᵤₜ) = -1. Bevorzugt ist *f*ᵢₙ = *f*ₒᵤₜ. Allerdings können grundsätzlich für die Leistungsaufnahme und Leistungsabgabe verschiedene Kennlinien vorgesehen sein. Entscheidend ist, dass bei einer vereinbarten Energiemenge diese auch durch die Variation beziehungsweise Veränderung der Leistung eingehalten wird. Mit anderen Worten muss bei einer vereinbarten Energiemenge *E* stets *E* = *∫_{T}P(t)*d*t* erfüllt sein, unabhängig von einer Leistungsaufnahme oder Leistungsabgabe. Hierbei bezeichnet *P*(*t*) die aktuelle vorzeichenbehaftete Leistung, die für eine Leistungsaufnahme positive und für eine Leistungsabgabe negative Werte annimmt.

Gemäß einer vorteilhaften Ausgestaltung der Erfindung ist es somit von Vorteil die Leistungsaufnahme und/oder die Leistungsabgabe derart zu steuern, dass die über den Netzanschlusspunkt innerhalb eines Zeitbereiches ausgetauschte Energiemenge gleich einer festgelegten Energiemenge ist.

Dadurch wird vorteilhafterweise die festgelegte Energiemenge, welche beispielsweise innerhalb des Zeitbereiches *T* ausgetauscht wird, eingehalten. Dennoch kann über den Leistungsaustausch eine netzdienliche und lokale Steuerung/Regelung der Netzspannung erfolgen.

Weitere Vorteile, Merkmale und Einzelheiten der Erfindung ergeben sich aus dem im Folgenden beschriebenen Ausführungsbeispielen sowie anhand der Zeichnungen. Dabei zeigen schematisiert:
- Figur 1: ein Energiesystem, welches an ein Niederspannungsnetz angeschlossen ist;
- Figur 2: ein Diagramm einer vorteilhaften Kennlinie; und
- Figur 3: ein Diagramm eines exemplarischen zeitlichen Verlaufs einer Leistungsaufnahme.

Gleichartige, gleichwertige oder gleichwirkende Elemente können in einer der Figuren oder in den Figuren mit denselben Bezugszeichen versehen sein.

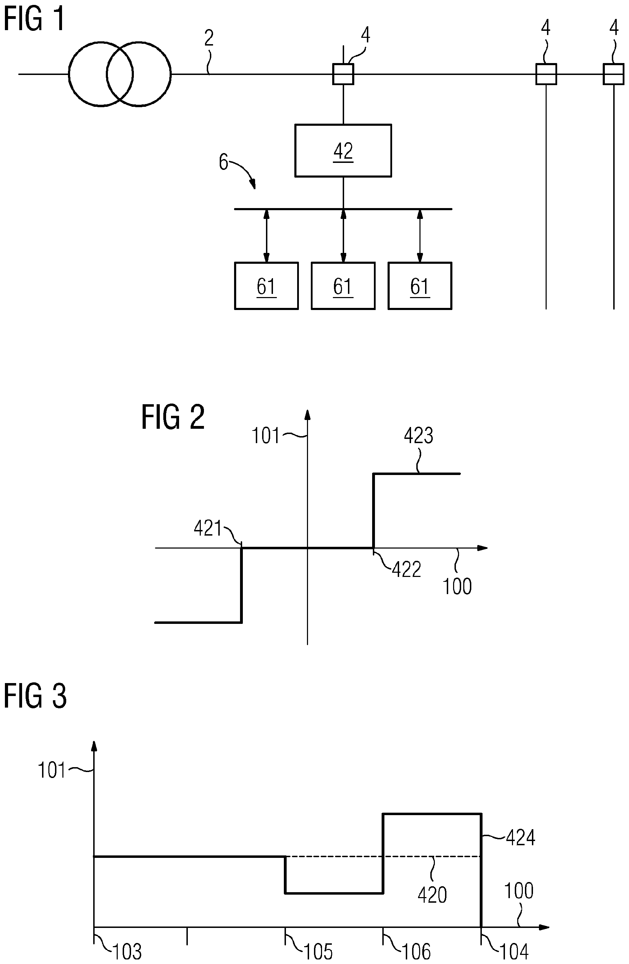

Die Figur 1 zeigt ein schematisches Energiesystem 6, welches an ein Niederspannungsnetz 2 über einen Netzanschlusspunkt 4 zum Leistungs- und/oder Energieaustausch angeschlossen ist.

Das Niederspannungsnetz 2 ist ein elektrisches Verteilernetz, welches beispielsweise eine Sollspannung (Sollwert) von 230 V (einphasig) aufweist. Die Netzspannung ist die aktuelle elektrische Spannung des Niederspannungsnetzes 2, die typischerweise um ihren Sollwert variiert. Alternativ ist der Sollwert der Netzspannung 400 V (dreiphasig). Der Sollwert des Niederspannungsnetzes 2 kann bis zu 1000 V betragen. Weitere Sollwerte der Netzspannung können, insbesondere außerhalb von Deutschland oder Europa, vorgesehen sein. Entscheidend ist, dass der Leistungsaustausch zwischen dem Energiesystem 6 und dem Niederspannungsnetz 2 größtenteils durch die Wirkleistung bestimmt ist, sodass der Sollwert der Netzspannung zur Kennzeichnung, ob im Sinne der vorliegenden Erfindung ein Niederspannungsnetz 2 vorliegt, sekundär ist.

Weiterhin sind in der Figur 1 mehrere Netzanschlusspunkte 4 für weitere nicht dargestellte Energiesysteme dargestellt.

Das Energiesystem 6 kann mehrere Komponenten 61, insbesondere energietechnische Anlagen, aufweisen. Beispielsweise ist das Energiesystem 6 ein privates Wohngebäude mit wenigstens einer Wärmepumpe und einer Photovoltaikanlage als Komponenten 61 beziehungsweise energietechnische Anlagen. Hierbei wird Leistung und/oder Energie über den Netzanschlusspunkt 4 ausgetauscht. Mit anderen Worten verbraucht das Energiesystem 6, beispielsweise seine Wärmepumpe, elektrische Energie und speist elektrische Energie, welche mittels der Photovoltaikanlage erzeugt wurde, in das Niederspannungsnetz 2 über den Netzanschlusspunkt 2 ein.

Gemäß der vorliegenden Erfindung ist eine Steuervorrichtung 42 vorgesehen, welche dazu ausgestaltet ist in Abhängigkeit der Netzspannung des Niederspannungsnetzes 2 den Leistungs- und/oder Energieaustausch zwischen dem Energiesystem 6 und dem Niederspannungsnetz 2 zu steuern. Hierbei umfasst der Begriff des Steuerns ein Regeln. Weiterhin ist die Steuervorrichtung 42 dazu ausgebildet, die Netzspannung beziehungsweise ihren aktuellen Wert zu erfassen.

Die Steuervorrichtung 42 ist dazu ausgebildet in Abhängigkeit der erfassten Netzspannung die Leistungsaufnahme des Energiesystems 6 zu verringern, falls die Netzspannung unterhalb eines ersten Schwellenwertes ist. Weiterhin ist die Steuervorrichtung 42 dazu ausgebildet in Abhängigkeit der erfassten Netzspannung die Leistungsabgabe des Energiesystems 6 zu erhöhen, falls die Netzspannung unterhalb des ersten Schwellenwertes ist.

Ferner ist die Steuervorrichtung 42 dazu ausgebildet in Abhängigkeit der erfassten Netzspannung die Leistungsaufnahme des Energiesystems zu erhöhen, falls die Netzspannung oberhalb eines bezüglich des ersten Schwellenwertes größeren zweiten Schwellenwertes ist. Weiterhin ist die Steuervorrichtung 42 dazu ausgebildet in Abhängigkeit der erfassten Netzspannung die Leistungsabgabe des Energiesystems zu verringern, falls die Netzspannung oberhalb des zweiten Schwellenwertes ist.

Mit anderen Worten wird der Leistungsaustausch zwischen dem Niederspannungsnetz 2 und dem Energiesystem 6 in Abhängigkeit der erfassten Netzspannung mittels der Steuervorrichtung 42 derart gesteuert, dass einem Verlassen der Netzspannung aus einem Normalbereich, der durch die Schwellenwerte begrenzt ist, entgegengewirkt wird. Beispielsweise ist der Sollwert der Netzspannung 230 V, der erste Schwellenwert 207 V und der zweite Schwellenwert 253 V. Wird eine Netzspannung unterhalb und/oder bei 207 V erfasst, so wird die Leistungsabgabe des Energiesystems 6 verringert und/oder die Leistungsabgabe des Energiesystems 6 erhöht. Wird eine Netzspannung oberhalb und/oder bei 253 V erfasst, so wird die Leistungsaufnahme des Energiesystems 6 erhöht und/oder die Leistungsabgabe des Energiesystem 6 verringert. Dadurch wird vorteilhafterweise positiv auf die Netzspannung eingewirkt, sodass diese bestenfalls in ihren Normalbereich zwischen 203 V und 253 V zurücckehrt.

Die Figur 2 zeigt ein Diagramm einer vorteilhaften Kennlinie 423.

An der Abszisse 100 des Diagramms ist die Differenz *u*(*t*) *- u*₀ in beliebigen Einheiten aufgetragen, wobei *u*(*t*) die zu einem Zeitpunkt *t* erfasste Netzspannung und *u*₀ den Sollwert der Netzspannung bezeichnet.

An der Ordinate 101 ist der Wert der Kennlinie 423, der vorliegend dimensionslos ist, aufgetragen.

Die Kennlinie 423 kann für eine Leistungsaufnahme und/oder Leistungsabgabe vorgesehen sein. Der Leistungs- beziehungsweise Energieaustausch wird mittels der Kennlinie 423 beziehungsweise basierend auf dieser durch *P*_{in/out}(*u*(*t*)) = *P*_{in/out} · [1-sgn(*P*_{in/out}) · *f*_{in/out}(*u*(*t*) - *u*₀)] gesteuert. Hierbei ist die Leistungsaufnahme *P̅*ᵢₙ als positiv und die Leistungsabgabe als *P*ₒᵤₜ negativ bezüglich des Energiesystems 6 anzusehen. Mit anderen Worten ist sgn(*P*ᵢₙ) = 1 und sgn(*P*ₒᵤₜ) = -1. Bevorzugt ist wie dargestellt *f*ᵢₙ = *f*ₒᵤₜ.

Die dargestellte Kennlinie 423 weist die funktionale Darstellung *f*_{in/out}(*u*(t) - *u*₀) = -*F*₁Θ(*u*₁ - *u*(*t*)) + *F₂*Θ(*u*(*t*) - *u*₂) auf, wobei *Θ* die Heaviside-Funktion bezeichnet, welche durch *Θ*(*x*) = 0 ist für *x* < 0 und *Θ*(*x*) = 1 für *x* ≥ 0 definiert ist. Weiterhin bezeichnet *u*₁ den ersten Schwellenwert 421 und *u*₂ den zweiten Schwellenwert 422.

Die Figur 3 zeigt ein Diagramm eines exemplarischen zeitlichen Verlaufs 424 einer Leistungsaufnahme.

An der Abszisse 100 des Diagramms ist die Zeit in beliebigen Einheiten aufgetragen.

An der Ordinate 101 des Diagramms ist die Leistungsaufnahme in beliebigen Einheiten aufgetragen.

Der Verlauf 424 beziehungsweise die Kurve 424 verdeutlicht den zeitlichen Verlauf 424 der Leistungsaufnahme.

Weiterhin ist ein Zeitbereich *T* dargestellt, der durch einen Startzeitpunkt 103 und einen Endzeitpunkt 104 begrenzt ist. Mit anderen Worten ist *T* = [*t₀,t₁*]*,* wobei *t*₀ den Startzeitpunkt 104 und *t*₁ den Endzeitpunkt kennzeichnet. Innerhalb des Zeitbereiches *T* soll eine Energiemenge *E_{T}* durch das Energiesystem 6 verbraucht werden. Mit anderen Worten soll die Energiemenge *E_{T}* an das Energiesystem 6 über das Niederspannungsnetz 2 geliefert werden. Dies korrespondiert zu einer mittleren Leistungsaufnahme *P̅*ᵢₙ = *E_{T}*/*T,* welche durch die gestrichelte Kurve 420 symbolisiert ist. Typischerweise erfolgt die Leistungsaufnahme des Energiesystems 6 mit im Wesentlichen konstanter Leistung, die der mittleren Leistung entspricht.

Zu einem ersten Zeitpunkt 105 ist die erfasste Netzspannung unterhalb des ersten Schwellenwertes 421. Dadurch reduziert die Steuervorrichtung 42 die Leistungsaufnahme in Bezug zur mittleren Leistungsaufnahme 420. Dies wird bis zu einem zweiten Zeitpunkt 106 durchgeführt. Ab dem Zeitpunkt 106 wird die Leistungsaufnahme bezüglich ihres mittleren Wertes 420 erhöht, beispielsweise da eine Netzspannung oberhalb des zweiten Schwellenwertes 422 vorliegt. Alternativ oder ergänzend muss die Energiemenge *E_{T}* an das Energiesystem 6 geliefert werden, sodass nach einem Zeitbereich geringeren Leistungsaufnahme bezüglich der mittleren Leistungsaufnahme stets ein Zeitbereich erhöhter Leistungsaufnahme bezüglich der mittleren Leistungsaufnahme innerhalb des Zeitbereiches *T* vorhanden sein muss.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 2: Niederspannungsnetz
- 4: Netzanschlusspunkt
- 6: Energiesystem
- 42: Steuervorrichtung
- 61: Komponenten
- 100: Abszisse
- 101: Ordinate
- 103: Startzeitpunkt
- 104: Endzeitpunkt
- 105: erster Zeitpunkt
- 106: zweiter Zeitpunkt
- 420: gestrichelte Linie (mittlere Leistung)
- 421: erster Schwellenwert
- 422: zweiter Schwellenwert
- 423: Kennlinie
- 424: Kurve (zeitlicher Verlauf einer Leistungsaufnahme)

## Patentansprüche

1. Steuervorrichtung (42) zur Steuerung einer Leistungsaufnahme und/oder einer Leistungsabgabe eines Energiesystems (6) über einen Netzanschlusspunkt (4) eines Niederspannungsnetzes (2), wobei mittels der Steuervorrichtung (42) eine Netzspannung am Netzanschlusspunkt (4) erfassbar ist, **dadurch gekennzeichnet, dass** die Steuervorrichtung (42) dazu ausgebildet ist
- die Leistungsaufnahme zu verringern und/oder die Leistungsabgabe zu erhöhen, falls die Netzspannung unterhalb eines ersten Schwellenwertes (421) ist; und/oder
- die Leistungsaufnahme zu erhöhen und/oder die Leistungsabgabe zu verringern, falls die Netzspannung oberhalb eines bezüglich des ersten Schwellenwertes (421) größeren zweiten Schwellenwertes (422) ist.

2. Steuervorrichtung (42) gemäß Anspruch 1, **dadurch gekennzeichnet, dass** die Leistungsaufnahme gemäß *P*ᵢₙ(*u*(*t*)) = *P̅*ᵢₙ · [1 + *f*ᵢₙ(*u*(*t*) - *u*₀)] veränderbar ist, wobei *u*(*t*) die erfasste Netzspannung, *u*₀ einen Sollwert der Netzspannung, *P̅*_{i̅n} eine mittlere Leistungsaufnahme (420), und *f*ᵢₙ eine Kennlinie (423) der Steuerung kennzeichnet, und *f*ᵢₙ(*u*(*t*) - *u*₀) < 0 ist, falls die Netzspannung unterhalb des ersten Schwellenwertes (421) ist, und *fᵢₙ*(*u*(*t*) - *u₀*) > 0 ist, falls die Netzspannung oberhalb des zweiten Schwellenwertes (422) ist.

3. Steuervorrichtung (42) gemäß Anspruch 1 oder 2, **dadurch gekennzeichnet, dass** die Leistungsabgabe gemäß *P*ₒᵤₜ(*u*(*t*)) = *P̅*ₒᵤₜ · [1 - *f*ₒᵤₜ(*u*(*t*) - *u*₀)] veränderbar ist, wobei *u(t)* die erfasste Netzspannung, *u*₀ einen Sollwert der Netzspannung, *P̅*ₒᵤₜ eine mittlere Leistungsabgabe, und *fₒᵤₜ* eine Kennlinie (423) der Steuerung kennzeichnet, und *f*ₒᵤₜ(*u*(*t*) - *u*₀) <0 ist, falls die Netzspannung unterhalb des ersten Schwellenwertes (421) ist, und *f*ₒᵤₜ(*u*(*t*) *- u*₀) > 0 ist, falls die Netzspannung oberhalb des zweiten Schwellenwertes (422) ist.

4. Verfahren zur Steuerung einer Leistungsaufnahme und/oder einer Leistungsabgabe eines Energiesystems (6) über einen Netzanschlusspunkt (4) eines Niederspannungsnetzes (2), bei dem eine Netzspannung des Niederspannungsnetzes (2) am Netzanschlusspunkt (4) erfasst wird, **gekennzeichnet durch** die Schritte:
- Verringern der Leistungsaufnahme und/oder Erhöhen der Leistungsabgabe, falls die Netzspannung unterhalb eines ersten Schwellenwertes (421) ist; und/oder
- Erhöhen der Leistungsaufnahme und/oder Verringern der Leistungsabgabe, falls die Netzspannung oberhalb eines bezüglich des ersten Schwellenwertes (421) größeren zweiten Schwellenwertes (422) ist.

5. Verfahren gemäß Anspruch 4, **gekennzeichnet dadurch, dass** die Leistungsaufnahme gemäß *P*ᵢₙ(*u*(*t*)) = *P̅*ᵢₙ · [1+*f*ᵢₙ(*u*(*t*) - u₀)] verändert wird, wobei u(t) die erfasste Netzspannung, *u*₀ einen Sollwert der Netzspannung, *P̅*_{i̅n} eine mittlere Leistungsaufnahme (420), und *f*ᵢₙ eine Kennlinie (423) der Steuerung kennzeichnet, und *f*ᵢₙ(*u*(*t*) - *u*₀) < 0 ist, falls die Netzspannung unterhalb des ersten Schwellenwertes (421) ist, und *f*ᵢₙ(*u*(*t*) - *u*₀) > 0 ist, falls die Netzspannung oberhalb des zweiten Schwellenwertes (422) ist.

6. Verfahren gemäß Anspruch 4 oder 5, **gekennzeichnet dadurch, dass** die Leistungsabgabe gemäß *P*ₒᵤₜ(*u*(*t*)) = *P̅*ₒᵤₜ · [1-*f*ₒᵤₜ(*u*(*t*) - *u*₀)] verändert wird, wobei *u(t)* die erfasste Netzspannung, *u*₀ einen Sollwert der Netzspannung, *P̅*ₒᵤₜ eine mittlere Leistungsabgabe (420), und *f*ₒᵤₜ eine Kennlinie der Steuerung kennzeichnet, wobei *f*ₒᵤₜ(*u*(*t*) - *u*_{Soll}) < 0 ist, wenn die Netzspannung unterhalb des ersten Schwellenwertes (421) ist, und *f*ₒᵤₜ(*u*(*t*) - *u*₀) > 0 ist, wenn die Netzspannung oberhalb des zweiten Schwellenwertes (422) ist.

7. Verfahren gemäß einem der Ansprüche 4 bis 6, **gekennzeichnet dadurch, dass** die Leistungsaufnahme und/oder die Leistungsabgabe derart gesteuert wird, dass die über den Netzanschlusspunkt (4) innerhalb eines Zeitbereiches ausgetauschte Energiemenge gleich einer festgelegten Energiemenge ist.

8. Niederspannungsnetz (2), umfassend wenigstens einen Netzanschlusspunkt (4) für ein Energiesystem (6), **dadurch gekennzeichnet, dass** dieses eine Steuervorrichtung (42) gemäß einem der Ansprüche 1 bis 3 umfasst.

9. Niederspannungsnetz (2) gemäß Anspruch 8, **dadurch gekennzeichnet, dass** die Steuervorrichtung (42) am Netzanschlusspunkt (4) des Energiesystems (6) angeordnet ist.
